# EUROPÄISCHE PATENTSCHRIFT

(11) **EP 2 530 023 B1**
(45) Veröffentlichungstag und Bekanntmachung des Hinweises auf die Patenterteilung: **30.07.2014**
(21) Anmeldenummer: 12003823.7
(22) Anmeldetag: 15.05.2012
(51) Int. Cl.: B65B 19/10, B65B 65/04, F16H 27/04, F16F 15/14

(54) **Vorrichtung zum Fördern von Produkten der Tabakindustrie**
Device for transporting tobacco industry products
Dispositif de transport de produits de l'industrie du tabac

(30) Priorität: 03.06.2011 DE 102011110251
(43) Veröffentlichungstag der Anmeldung: 05.12.2012
(73) Patentinhaber: Focke & Co. (GmbH & Co. KG), 27283 Verden (DE)
(72) Erfinder: Blome, Hermann, 27337 Blender-Einste (DE); Buse, Henry, 27374 Visselhövede (DE)
(74) Vertreter: Aulich, Martin

(56) Entgegenhaltungen:
- EP-A1- 0 728 666
- DE-A1- 2 519 030
- US-A- 3 572 173
- US-A- 4 955 243

## Beschreibung

Die vorliegende Erfindung betrifft eine Vorrichtung zum Fördern von Produkten der Tabakindustrie, insbesondere Zigaretten oder Zigarettengruppen, mit einer Antriebswelle, mit der über ein erstes Schrittgetriebe ein Förderorgan mit einer Mehrzahl von Aufnahmen für die zu fördernden Produkte intermittierend antreibbar ist.

Eine solche Vorrichtung ist aus DE 25 19 030 A bekannt.

Solche Fördervorrichtungen werden bei Zigarettenverpackungsmaschinen insbesondere im Zusammenhang mit der Bildung von Zigarettengruppen eingesetzt. Die gruppierten Zigaretten werden im weiteren Verlauf des Verpackungsprozesses dann in einzelne Zigarettenpackungen integriert. Die Zigarettengruppen werden dabei gebildet, indem die Zigaretten durch geeignete Schieber aus Schächten eines Zigarettenmagazins, in denen sie einreihig übereinanderliegen, taktweise in die einzelnen Aufnahmen des Förderorgans geschoben werden. Das Förderorgan ist in der Regel ein Revolver mit entsprechenden Aufnahmetaschen oder ggf. ein Taschenförderer mit umlaufenden Förderband.

Um die Geschwindigkeit des Verpackungsprozesses weiter steigern zu können, ist es aufgrund der nicht steigerbaren Fallgeschwindigkeit der Zigaretten in den Schächten des Zigarettenmagazins notwendig, die Anzahl der Schächte zu erhöhen. Hierdurch wird es erforderlich, zum Abfördern der Zigaretten aus den Schächten immer größere Förderorgane mit einer noch größeren Anzahl von Aufnahmetaschen einzusetzen. Dies bedingt allerdings auch immer größere Abmessungen sowie immer größere Massen, die intermittierend bzw. taktweise bewegt werden müssen. Die intermittierenden bzw. schrittweisen Förderbewegungen gehen naturgemäß einher mit Beschleunigungs- und Abbremsvorgängen der Förderorgane. Die entsprechenden Antriebs- und Verzögerungsmomente, die durch die immer größeren Massen benötigt werden bzw. entstehen, führen letztlich zu unerwünschten Drehmomenten, die in den Antriebsstrang des Förderorgans eingeleitet werden.

Letztlich kommt es aufgrund der eingeleiteten Drehmomente zu Drehzahlschwankungen und ggf. Schwingungen bzw. sogar Resonanzschwingungen im Antriebsstrang. Die Schwankungen bzw. Schwingungen können unter anderem die Abstimmung zwischen dem Förderorgan und den angrenzenden, mit diesem synchronisierten Organen stören, was zur Reduktion der Lebensdauer derselben führen kann. Im schlimmsten Fall nehmen die einzelnen Organe und/oder die geförderten Produkte hierbei unmittelbar Schaden. Die Schäden sind umso größer bzw. treten umso häufiger auf, je größer die Taktzahlen des Förderorgans sind. Bekanntlich steigern sich die auftretenden dynamischen Kräfte mit dem Quadrat der Geschwindigkeit.

Die Druckschrift US 4 955 242 A beschreibt in Spalte 1, Zeilen 35-50 ein Transformationsgetriebe, bei dem von der Antriebswelle eine Ausgleichsmasse angetrieben wird, die kompensierende Drehmomente in die Antriebswelle einleiten soll.

Es ist es Aufgabe der vorliegenden Erfindung, die eingangs genannte Fördervorrichtung dahingehend weiterzubilden, dass Drehmomentschwankungen im Antriebsstrang bzw. in der Antriebswelle verhindert, mindestens aber klein gehalten werden können.

Diese Aufgabe wird gelöst durch eine Vorrichtung mit den Merkmalen des Anspruchs 1.

Danach ist vorgesehen, dass die Antriebswelle ein zweites, eine rotierende Ausgleichsmasse antreibendes Schrittgetriebe antreibt, wobei das zweite Schrittgetriebe und die Ausgleichsmasse derart ausgebildet sind, dass aus der Massenträgheit des Förderorgans resultierenden Drehmomentschwankungen der Antriebswelle entgegengewirkt wird.

Dabei sind das zweite Schrittgetriebe und die Ausgleichsmasse derart ausgebildet, dass die Ausgleichsmasse im Betrieb der Vorrichtung über das zweite Schrittgetriebe Drehmomente in eine mit der Antriebswelle gekoppelte weitere Welle einleitet, die Drehmomente, die das Förderorgan über das erste Schrittgetriebe in die Antriebswelle oder in die weitere Welle einleitet, teilweise oder vollständig kompensieren.

Das erste Schrittgetriebe ist als Kurvengetriebe ausgebildet. Gleiches gilt für das zweite Schrittgetriebe.

Sowohl das erste als auch das zweite Schritt- bzw. Kurvengetriebe weisen dabei jeweils ein Kurvenscheibenpaar auf, das zur Übertragung von Drehbewegungen mit jeweils einem Rollenstern zusammenwirkt. Das Zusammenwirken erfolgt dabei derart, dass sich der jeweilige Rollenstern auf dem ihm zugeordneten Kurvenscheibenpaar bewegt bzw. auf diesem abrollt. Dabei ist der Rollenstern des ersten Kurvengetriebes auf der Abtriebswelle des ersten Kurvengetriebes angeordnet, der Rollenstern des zweiten Kurvengetriebes auf der Abtriebswelle des zweiten Kurvengetriebes.

Das Kurvenscheibenpaar des ersten Kurvengetriebes wirkt entsprechend mit dem Rollenstern der Abtriebswelle des ersten Kurvenscheibenpaares zusammen. Die genannte Abtriebswelle des ersten Kurvengetriebes wiederum ist mit dem Förderorgan entsprechend gekoppelt bzw. treibt dieses an, sodass das Förderorgan in die gewünschten, intermittierenden Drehbewegungen versetzt werden kann. Die Kopplung geschieht vorzugsweise unter Zwischenschaltung von einem oder mehreren die Abtriebswelle des ersten Kurvengetriebes sowie eine Welle des Förderorgans zur Übertragung der Drehbewegungen miteinander verbindenden Zahnrädern.

Das Kurvenscheibenpaar des zweiten Kurvengetriebes wirkt mit dem Rollenstern der Abtriebswelle des zweiten Kurvengetriebes zusammen. Die Abtriebswelle des zweiten Kurvengetriebes wiederum treibt die Ausgleichsmasse an bzw. ist mit dieser geeignet gekoppelt, sodass dieses in die für den erfindungsgemäßen Ausgleich der Drehmomente geeigneten Rotationen versetzt werden kann.

Beide Kurvenscheibenpaare beider Kurvengetriebe sind auf einer gemeinsamen, insbesondere auf einer parallel zur Antriebswelle verlaufenden, mit dieser gekoppelten Zwischenwelle angeordnet.

Die Antriebswelle der Fördervorrichtung ist in diesem Fall wiederum auf zur Übertragung der Drehbewegungen geeignete Weise mit der gemeinsamen Welle gekoppelt bzw. treibt diese an.

Auf die geschilderte Weise können letztlich die Drehbewegungen der Antriebswelle der Vorrichtung an das Förderorgan übertragen werden.

Weitere Merkmale der vorliegenden Erfindung ergeben sich aus den beiliegenden Patentansprüchen, der nachfolgenden Beschreibung eines bevorzugten Ausführungsbeispieles sowie aus den beigefügten Zeichnungen.

Darin zeigt:
- Fig. 1: eine erfindungsgemäße Vorrichtung zum Fördern von Zigaretten zusammen mit mit der Vorrichtung zusammenwirkenden Organen in schematischer Schrägansicht,

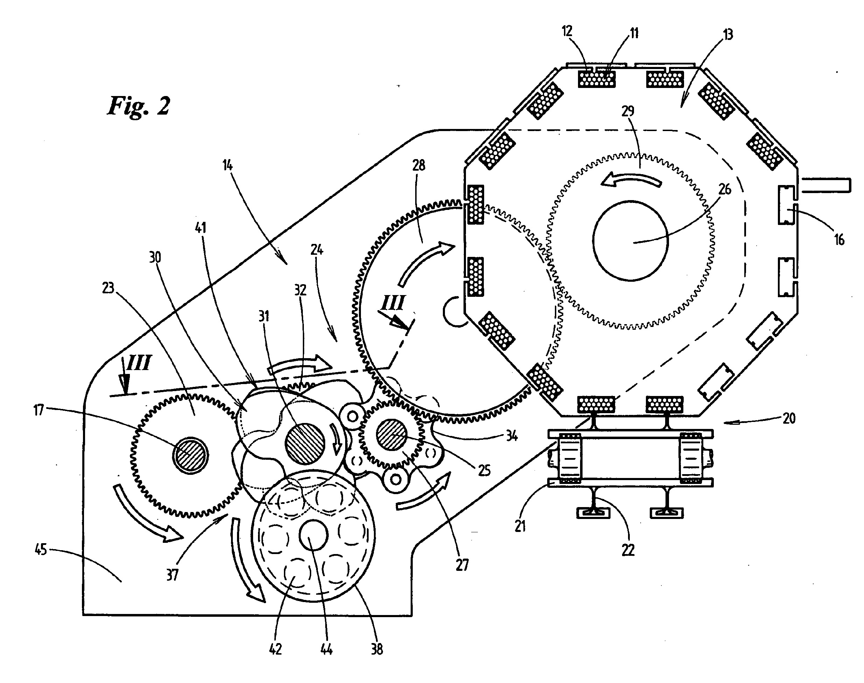

- Fig. 2: einen Schnitt durch die Fördervorrichtung der Fig. 1 entlang der Schnittlinie II-II aus Fig. 1,

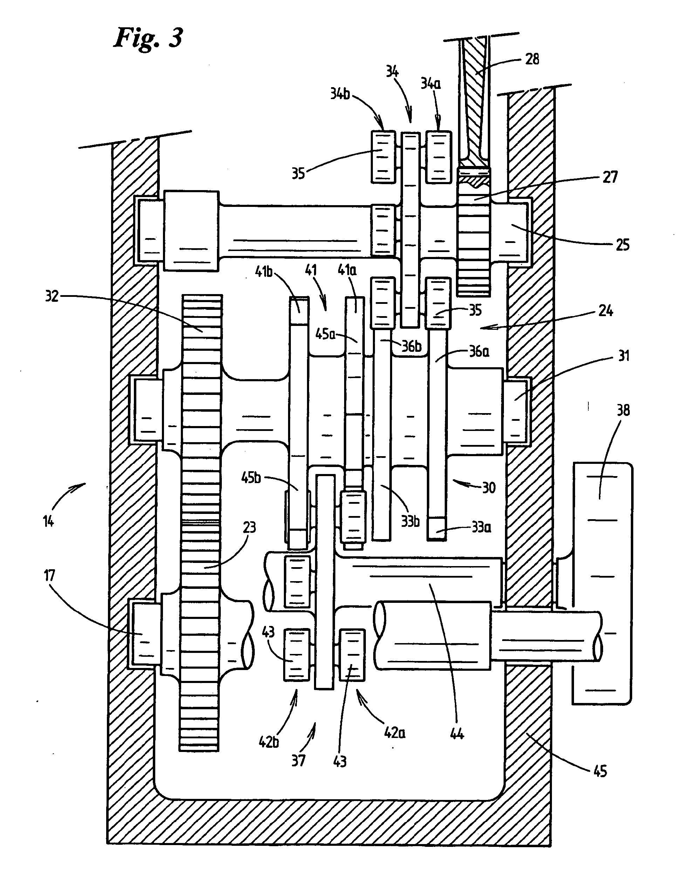

- Fig. 3: einen Schnitt durch die Fördervorrichtung aus den Fig. 1 und 2 entlang der Schnittlinie III-III in Fig. 2,
- Fig. 4: ein Diagramm, in dem die in eine mit der Antriebswelle der Fördervorrichtung gekoppelte Zwischenwelle eingeleiteten Drehmomente abhängig von dem Drehwinkel der Antriebswelle dargestellt sind.

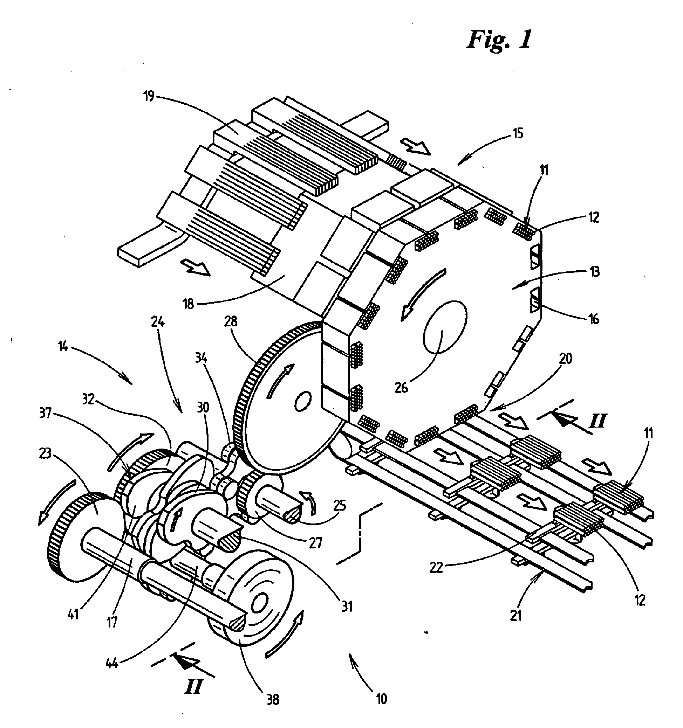

In Fig. 1 ist eine Fördervorrichtung 10 zur Förderung von Zigarettengruppen 11 aus Zigaretten 12 als Teil einer Verpackungsmaschine zur Verpackung von Zigaretten gezeigt.

Die Fördervorrichtung 10 umfasst ein in diesem Fall rotierendes Förderorgan 13, nämlich im vorliegenden Fall einen Zigarettenrevolver. Alternativ könnte beispielsweise auch ein Bandförderer mit einzelnen Aufnahmen bzw. Taschen eingesetzt werden.

Das Förderorgan 13 wird intermittierend, d. h. takt- bzw. schrittweise angetrieben durch eine Antriebseinrichtung 14. Diese umfasst neben einer von einem nicht dargestellten Motor angetriebenen Antriebswelle 17 diverse weitere Bauteile, die nachfolgend noch näher beschrieben werden.

Das rotierende Förderorgan 13 wird in einer Einschubstation 15 taktweise mit den Zigarettengruppen 11 befüllt. Hierzu verfügt das rotierende Förderorgan 13 über über den Umfang verteilte Aufnahmen 16, nämlich einzelne Taschen, in die die Zigarettengruppen 11 eingeschoben werden.

Die Zigaretten 12 der einzelnen Zigarettengruppen 11 entstammen einem nicht dargestellten, sich im Wesentlichen in einer Vertikalebene erstreckenden Zigarettenmagazin mit mehreren Schächten, in denen die einzelnen Zigaretten 12 horizontal ausgerichtet übereinanderliegen. Derartige Zigarettenmagazine sind im Stand der Technik bekannt, beispielsweise aus der EP 1 419 967 A1. Die einzelnen Schächte des Zigarettenmagazins enden dabei an einem sogenannten Zigarettentisch 18 der Einschubstation 15.

Bei stillstehendem Förderorgan 13 erfolgt die Befüllung von oberen, entlang des Zigarettentisches 18 der Einschubstation 15 ausgerichteten Aufnahmen 16 mit den Zigaretten 12. Jeder Aufnahme 16 ist dabei jeweils ein die Zigaretten in die Aufnahmen 16 schiebender Zigarettenstößel 19 zugeordnet. Jeweils die unteren drei Reihen von Zigaretten 12 werden unter Bildung einer Zigarettengruppe durch die Zigarettenstößel 19 aus dem jeweiligen Schacht des Zigarettenmagazins entlang des Zigarettentisches 18 in die entsprechenden Aufnahmen 16 eingeschoben.

Nach dem Befüllvorgang wird das Förderorgan 13 entlang der Pfeilrichtung in der Fig. 1 weiterbewegt, bis die nächste Gruppe von zu diesem Zeitpunkt noch unbefüllten Aufnahmen 16 entlang des Zigarettentisches 18 der Einschubstation 15 ausgerichtet ist. Die in Fig. 1 jeweils unten angeordneten, befüllten Aufnahmen 16 werden dann in einer Ausschubstation 20 aus den Aufnahmen 16 ausgefördert. Hierzu werden Mitnehmer 22 eines als umlaufender Endlosförderer ausgebildeten Abförderers 21 quer zur Rotationsebene des Förderorgans 13 entlang dieser unteren Aufnahmen 16 bewegt, und zwar derart, dass die Mitnehmer 22 die Zigarettengruppen 11 unter Mitnahme derselben aus den Aufnahmen 16 schieben. Die von den Mitnehmern 22 erfassten Zigarettengruppen 11 werden anschließend zur weiteren Handhabung in der Verpackungsmaschine weitergefördert.

Um das Förderorgan 13 schritt- bzw. taktweise antreiben zu können mit entsprechenden Ruhepausen zwischen den Takten für das Ein- bzw. Ausfördern der Zigarettengruppen 11 in die Aufnahmen 16 hinein bzw. aus diesen heraus, ist die Antriebseinrichtung 14 in besonderer Weise ausgebildet:
Die Antriebswelle 17 treibt - im vorliegenden Fall über ein drehfest mit ihr verbundenes Zahnrad 23 - ein erstes Schrittgetriebe 24 an, dessen Abtriebswelle 25 im Ergebnis eine drehfest mit dem Förderorgan 13 verbundene Welle 26 antreibt bzw. in Rotationen versetzt.

Im vorliegenden Beispiel geschieht dies, indem ein mit der Abtriebswelle 25 des ersten Schrittgetriebes 24 drehfest verbundenes Zahnrad 27 mit einem Zwischenzahnrad 28 kämmt, das wiederum mit einem mit der Förderorganwelle 26 drehfest verbundenes Zahnrad 29 kämmt.

Das Förderorgan 13 vollzieht - wie oben bereits beschrieben - taktweise Förderbewegungen mit Ruhephasen zwischen den Bewegungen.

Dabei wird das Förderorgan 13 pro Takt zunächst aus der Ruhephase beschleunigt und im weiteren Verlauf wieder abgebremst, bis die dem nächsten Vorschubschritt des Förderorgans 13 entsprechende Gruppe von unbefüllten Aufnahmen 16 entlang der Einschubstation 15 ausgerichtet ist.

Um diese Bewegung zu bewirken, verfügt das erste Schrittgetriebe 24 über ein geeignet ausgebildetes Kurvenscheibenpaar 30, das auf einer parallel zu der Antriebswelle 17 angeordneten Zwischenwelle 31 sitzt bzw. drehfest mit dieser verbunden ist. Auf der Zwischenwelle 31 sitzt zudem ein Zahnrad 32, das zur Übertragung der Drehbewegung der Antriebswelle 17 mit dem Zahnrad 23 derselben kämmt.

Das Kurvenscheibenpaar 30 des ersten Schrittgetriebes 24 umfasst zwei parallel mit Abstand in der Vertikalebene angeordnete, einzelne Kurvenscheiben 33a, 33b.

Das Kurvenscheibenpaar 30 wirkt mit einem Rollenstern 34 zusammen, der drehfest mit der Abtriebswelle 25 des ersten Schrittgetriebes 24 verbunden ist. Der Rollenstern 34 ist zu diesem Zweck in derselben vertikalen Ebene angeordnet wie das Kurvenscheibenpaar 30. Genauer gesagt verfügt der Rollenstern 34 über zwei mit Abstand in zueinander parallelen (vertikalen) Ebenen angeordnete Gruppen 34a, 34b von Rollen 35.

Die Rollengruppe 34a ist dabei in derselben (vertikalen) Ebene angeordnet wie die Kurvenscheibe 33a des Kurvenscheibenpaares 30, die Rollengruppe 34b in derselben (vertikalen) Ebene wie die Kurvenscheibe 33b des Kurvenscheibenpaars 30. Demnach ist die Kurvenscheibe 33a den Rollen der Rollengruppe 34a zugeordnet, die Kurvenscheibe 33b den Rollen der Rollengruppe 34b.

Die Rollen 35 bewegen sich als Abtaster auf den Umfangsflächen 36a, 36b der Kurvenscheiben 33a, 33b und greifen so die Form bzw. Kontur derselben ab. Das Kurvenscheibenpaar 30 bzw. die Kurvenscheiben 33a, 33b, sowie der Rollenstern 34 bzw. die Rollengruppen 34a, 34b sind dabei derart angeordnet und in ihrer Form ausgebildet, dass die auf die Abtriebswelle 25 übertragene Drehbewegung bzw. die Drehgeschwindigkeit der Abtriebswelle 25 über die Zeit bzw. über den Drehwinkel nicht konstant ist, sondern der Form der Kurvenscheiben entsprechend ungleichförmig. Die ungleichförmige Drehzahl bzw. die ungleichförmige Drehbewegung wird weiter schließlich auf die Förderorganwelle 26 übertragen und bewirkt schließlich die entsprechende ungleichförmige Bewegung des Förderorgans 13 mit Beschleunigungsphasen, gegebenenfalls Phasen konstanter Bewegung, Abbremsphasen sowie Ruhephasen des Förderorgans 13.

Wie beschrieben, ist es für die intermittierenden Bewegungen des Förderorgans 13 notwendig, das Förderorgan 13 mittels des ersten Schrittgetriebes 24 taktweise zu beschleunigen und wieder abzubremsen. Diese Beschleunigungs-/Abbremsvorgänge führen aufgrund der Massenträgheit des Förderorgans 13 zu Drehmomentschwankungen im Antriebsstrang bzw. in der Antriebseinrichtung 14.

Genauer gesagt, werden in die Antriebswelle 17 Drehmomente eingeleitet, die zu Drehzahlschwankungen derselben und (Resonanz-)Schwingungen führen können. Die Drehzahlschwankungen sowie die Schwingungen können letztlich dazu führen, dass die Bewegungen der einzelnen, mit der Fördervorrichtung 10 interagierenden Organe der Verpackungsmaschine, wie etwa die Zigarettenstößel 19 und der Abförderer 21, nicht mehr mit zu den taktweisen Bewegungen des Förderorgans 13 synchron laufen.

So ist denkbar, dass die Einschubtakte des Zigarettenstößels 19 nicht mehr exakt in den Ruhephasen des Förderers 13 erfolgen, sondern beispielsweise schon zum Ende der jeweiligen Abbremsphasen.

In einem solchen Fall würden die Zigarettengruppen 11 beispielsweise mindestens teilweise gegen die Radialseiten des Förderorgans 13 gedrückt werden und nicht in die Aufnahmen 16. Sowohl die zu fördernden Produkte können in einer solchen Konstellation Schaden nehmen als auch die Zigarettenstößel 19. Ähnliches gilt in Bezug auf den Abförderer 21.

Um die genannten Drehmomentschwankungen zu vermeiden, verfügt die Antriebseinrichtung 14 über ein zweites Schrittgetriebe 37. Dieses zweite Schrittgetriebe 37 ist ebenfalls mit der Antriebswelle 17 gekoppelt.

Es wandelt die Bewegungen der Antriebswelle 17 in Drehbewegungen einer Ausgleichsmasse 38 um. Das zweite Schrittgetriebe 37 sowie die Ausgleichsmasse 38 sind dabei derart ausgebildet, dass die Drehmomente, die durch die Massenträgheit des Förderorgans 13 auf die Antriebswelle 17 übertragen werden, kompensiert werden.

Mit anderen Worten sorgt das zweite Schrittgetriebe 37 zusammen mit der Ausgleichsmasse 38 für die Erzeugung von Drehmomenten, die den vorbeschriebenen, durch das Förderorgan 13 eingebrachten Drehmomenten entgegengesetzt sind.

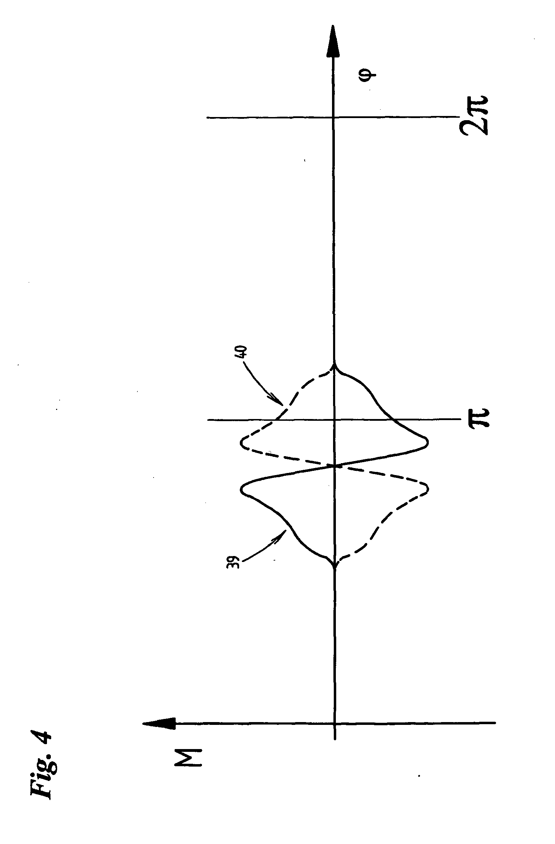

Dies ist beispielhaft in Fig. 4 gezeigt.

Dort stellt die Kurve 39 das winkelabhängige Drehmoment dar, das durch das Förderorgan 13 auf die Zwischenwelle 31 übertragen wird. Diese Drehmomente würden ohne eine Kompensation an die Antriebswelle 17 weitergegeben werden.

Der Kurvenverlauf 40 zeigt das negative bzw. entgegengesetzte Drehmoment, das durch die Ausgleichsmasse 38 über das zweite Schrittgetriebe 37 auf die Zwischenwelle 31 übertragen wird. Wie erkennbar ist, addieren sich die beiden Drehmomente zu einem Gesamtdrehmoment von Null. Mit anderen Worten wird insgesamt kein Drehmomentschwankungen erzeugendes Drehmoment auf die Antriebswelle 17 übertragen. Das zweite Schrittgetriebe 37 und die Ausgleichsmasse 38 sind so ausgebildet, dass im Betrieb der Vorrichtung 10 zu jedem Zeitpunkt bzw. bei jedem Drehwinkel der Zwischenwelle 31 der Betrag des von der Ausgleichsmasse 38 in die Zwischenwelle 31 eingeleiteten Drehmoments dem Betrag des durch das Förderorgan 13 in die Zwischenwelle 31 eingeleiteten Drehmoments entspricht.

Um dies zu erreichen, ist das zweite Schrittgetriebe 37 vorliegend ebenfalls als Kurvengetriebe ausgebildet. Es verfügt ähnlich wie das erste Schrittgetriebe 24 über ein Kurvenscheibenpaar 41, das zwei parallel beabstandete Kurvenscheiben 41 a, 41 b umfasst. Das Kurvenscheibenpaar 41 wirkt zusammen mit einem Rollenstern 42, der analog zu dem ersten Schrittgetriebe 24 jeweils den einzelnen Kurvenscheiben 41 a, 41 b zugeordnete Gruppen 42a, 42b von Rollen 43 aufweist.

Der Rollenstern 42 sitzt auf einer Abtriebswelle 44 des zweiten Schrittgetriebes 37. Die Abtriebswelle 44 treibt die Ausgleichsmasse 38 an, die im vorliegenden Fall unmittelbar drehfest mit der Abtriebswelle 44 verbunden ist.

Analog zu dem ersten Schrittgetriebe 37 bewegen sich die Rollen 43 entlang der Umfangsflächen 45a, 45b der Kurvenscheiben 41 a, 41 b.

Die Ausgleichsmasse 38 wird wie das Förderorgan 13 ungleichförmig angetrieben, d.h. die Drehzahl derselben ist nicht konstant. Vielmehr weist die Drehbewegung der Ausgleichsmasse 38 ebenfalls Beschleunigungs-, Abbrems- und Ruhephasen auf. Allerdings laufen diese Phasen phasenversetzt zu den entsprechenden Phasen des Förderorgans 13 ab.

Im Ergebnis wird bei Abbremsvorgängen des Förderorgans 13 aus der Massenträgheit resultierende Energie des Förderorgans 13 in Rotationsenergie der Ausgleichsmasse 38 überführt. Die Rotationsenergie der Ausgleichsmasse 38 wird dagegen in Phasen, in denen das Förderorgan 13 beschleunigt wird, wieder als Rotationsenergie an dieses abgeführt bzw. zu diesem rücküberführt.

Sämtliche Wellen der Antriebseinrichtung 14 sind im Übrigen im vorliegenden Ausführungsbeispiel parallel zueinander angeordnet und in einem gemeinsamen Gehäuse 45 der Fördervorrichtung 10 drehbar gelagert.

### Bezugszeichenliste:

- 10: Fördervorrichtung
- 11: Zigarettengruppe
- 12: Zigarette
- 13: Förderorgan
- 14: Antriebseinrichtung
- 15: Einschubstation
- 16: Aufnahme
- 17: Antriebswelle
- 18: Zigarettentisch
- 19: Zigarettenstößel
- 20: Ausschubstation
- 21: Abförderer
- 22: Mitnehmer
- 23: Zahnrad
- 24: Schrittgetriebe
- 25: Abtriebswelle
- 26: Welle
- 27: Zahnrad
- 28: Zwischenzahnrad
- 29: Zahnrad
- 30: Kurvenscheibenpaar
- 31: Zwischenwelle
- 32: Zahnrad
- 33a: Kurvenscheibe
- 33b: Kurvenscheibe

- 34: Rollenstern
- 34a: Rollengruppe
- 34b: Rollengruppe
- 35: Rolle
- 36a: Umfangsfläche
- 36b: Umfangsfläche
- 37: Schrittgetriebe
- 38: Ausgleichsmasse
- 39: Kurve
- 40: Kurvenverlauf
- 41: Kurvenscheibenpaar
- 41 a: Kurvenscheibe
- 41 b: Kurvenscheibe
- 42: Rollenstern
- 42a: Rollengruppe
- 42b: Rollengruppe
- 43: Rolle
- 44: Abtriebswelle
- 45a: Umfangsfläche
- 45b: Umfangsfläche

## Patentansprüche

1. Vorrichtung zum Fördern von Produkten der Tabakindustrie, insbesondere Zigaretten (12) oder Zigarettengruppen (11), mit einer Antriebswelle (17), mit der über ein erstes Schrittgetriebe (24) ein Förderorgan (13) mit einer Mehrzahl von Aufnahmen (16) für die zu fördernden Produkte (11, 12) intermittierend antreibbar ist, **gekennzeichnet, durch** folgende Merkmale:
(a) mit der Antriebswelle (17) ist über ein zweites Schrittgetriebe (37) eine rotierende Ausgleichsmasse (38) antreibbar,
(b) das zweite Schrittgetriebe (37) und die Ausgleichsmasse (38) sind derart ausgebildet, dass aus der Massenträgheit des Förderorgans (13) resultierenden Drehmomentschwankungen der Antriebswelle (17) entgegengewirkt wird,
(c) die beiden Schrittgetriebe (24, 37) sind jeweils als mindestens ein Paar von Kurvenscheiben (30, 41) aufweisende Kurvengetriebe (24, 37) ausgebildet,
(d) jedes Kurvengetriebe (24, 37) wirkt zur Übertragung von Rotationsbewegungen jeweils mit einem auf einer Abtriebswelle (25, 44) des jeweiligen Kurvengetriebes (24, 37) sitzenden Rollenstern (34, 42) zusammen,
(e) die beiden Kurvenscheibenpaare (30, 41) sind auf einer gemeinsamen, mit der Antriebswelle (17) gekoppelten Zwischenwelle (31) angeordnet,
(f) das Kurvenscheibenpaar (30) des ersten Kurvengetriebes (24) wirkt zur Übertragung von Drehbewegungen mit dem Rollenstern der Abtriebswelle (25) des ersten Kurvengetriebes (24) zusammen, wobei diese Abtriebswelle (25) zur Übertragung der Drehbewegungen auf das Förderorgan (13) mit dem Förderorgan (13) gekoppelt ist,
(g) das Kurvenscheibenpaar (30, 41) des zweiten Kurvengetriebes (37) wirkt zur Übertragung von Drehbewegungen mit dem Rollenstern (41) der Abtriebswelle (44) des zweiten Kurvengetriebes (37) zusammen, wobei diese Abtriebswelle (44) zur Übertragung der Drehbewegungen auf die Ausgleichsmasse (38) mit der Ausgleichsmasse (38) gekoppelt ist.

2. Vorrichtung gemäß Anspruch 1, **dadurch gekennzeichnet, dass** das zweite Schrittgetriebe (37) und die Ausgleichsmasse (38) derart ausgebildet sind, dass die Ausgleichsmasse (38) im Betrieb der Vorrichtung (10) über das zweite Schrittgetriebe (37) Drehmomente in die Antriebswelle (17) oder eine mit ihr gekoppelte weitere Welle (31) einleitet, die Drehmomente, die das Förderorgan (13) über das erste Schrittgetriebe (24) in die Antriebswelle (17) oder die weitere Welle (31) einleitet, teilweise oder vollständig kompensieren.

3. Vorrichtung gemäß Anspruch 2, **dadurch gekennzeichnet, dass** das zweite Schrittgetriebe (37) und die Ausgleichsmasse (38) derart ausgebildet sind, dass im Betrieb der Vorrichtung (10) zu jedem Zeitpunkt der Betrag des von der Ausgleichsmasse (38) in die Antriebswelle (17) oder in die weitere Welle (31) eingeleiteten, dem durch das Förderorgan (13) eingeleiteten Drehmoment entgegenwirkenden Drehmoments dem Betrag des durch das Förderorgan (13) in die Welle eingeleiteten Drehmoments entspricht.

4. Vorrichtung gemäß einem oder mehreren der vorhergehenden Ansprüche, **dadurch gekennzeichnet, dass** auf der Abtriebswelle (25) des ersten Schrittgetriebes (24) ein Zahnrad (23) sitzt, das, gegebenenfalls über ein oder mehrere weitere Zwischenzahnräder, die Drehbewegungen der Abtriebswelle (25) auf eine drehfest mit dem Förderorgan (13) verbundene Welle (26) überträgt.

5. Vorrichtung gemäß einem oder mehreren der vorhergehenden Ansprüche, **dadurch gekennzeichnet, dass** das Förderorgan (13) ein Endlosförderer für Zigaretten ist, insbesondere eine Taschenkette oder ein Revolver mit Taschen für die Aufnahme von Zigaretten.

6. Vorrichtung gemäß einem oder mehreren der vorhergehenden Ansprüche, **dadurch gekennzeichnet, dass** das zweite Schrittgetriebe (37) und die Ausgleichsmasse (38) derart ausgebildet sind, dass zu den aus der Massenträgheit des Förderorgans (13) resultierende Drehmomenten der Antriebswelle (17) entgegengewirkt wird.

## Claims

1. Apparatus for conveying products of the tobacco industry, in particular cigarettes (12) or cigarette groups (11), having a drive shaft (17), by way of which a conveying element (13) with a plurality of receptacles (16) for the products (11, 12) to be conveyed can be driven intermittently via a first step-by-step motion linkage (24), **characterized by** the following features
(a) a rotating compensating mass (38) can be driven by way of the drive shaft (17) via a second step-by-step motion linkage (37),
(b) the second step-by-step motion linkage (37) and the compensating mass (38) are configured in such a way that torque fluctuations of the drive shaft (17) which result from the mass moment of inertia of the conveying element (13) are counteracted,
(c) both of the step-by-step motion linkages (24, 37) are each configured as cam mechanisms (24, 37) having at least one pair of cam discs (30, 41),
(d) each cam mechanism (24, 37), in order to transmit rotational movements, interacts in each case with a roller star (34, 42) which is seated on an output shaft (25, 44) of the respective cam mechanism (24, 37),
(e) the two cam disc pairs (30, 41) are arranged on a common intermediate shaft (31) which is coupled to the drive shaft (17),
(f) in order to transmit rotational movements, the cam disc pair (30) of the first cam mechanism (24) interacts with the roller star of the output shaft (25) of the first cam mechanism (24), wherein this output shaft (25), in order to transmit the rotational movements to the conveying element (13), is coupled to the conveying element (13),
(g) in order to transmit rotational movements, the cam disc pair (30, 41) of the second cam mechanism (37) interacts with the roller star (41) of the output shaft (44) of the second cam mechanism (37), wherein this output shaft (44), in order to transmit the rotational movements to the compensating mass (38), is coupled to the compensating mass (38).

2. Apparatus according to Claim 1, **characterized in that** the second step-by-step motion linkage (37) and the compensating mass (38) are configured in such a way that, during operation of the apparatus (10), the compensating mass (38) introduces torques via the second step-by-step motion linkage (37) into the drive shaft (17) or a further shaft (31) which is coupled to it, which torques compensate partially or completely for torques which the conveying element (13) introduces via the first step-by-step motion linkage (24) into the drive shaft (17) or the further shaft (31).

3. Apparatus according to Claim 2, **characterized in that** the second step-by-step motion linkage (37) and the compensating mass (38) are configured in such a way that, at every instant during operation of the apparatus (10), the magnitude of the torque which is introduced by the compensating mass (38) into the drive shaft (17) or into the further shaft (31) and counteracts the torque which is introduced by the conveying element (13) corresponds to the magnitude of the torque which is introduced into the shaft by the conveying element (13).

4. Apparatus according to one or more of the preceding claims, **characterized in that** a gearwheel (23) is seated on the output shaft (25) of the first step-by-step motion linkage (24), which gearwheel (23) transmits the rotational movements of the output shaft (25), optionally via one or more further idler gearwheels, to a shaft (26) which is connected fixedly to the conveying element (13) so as to rotate with it.

5. Apparatus according to one or more of the preceding claims, **characterized in that** the conveying element (13) is an endless conveyor for cigarettes, in particular a pocket chain or a revolver with pockets for receiving cigarettes.

6. Apparatus according to one or more of the preceding claims, **characterized in that** the second step-by-step motion linkage (37) and the compensating mass (38) are configured in such a way that the torques of the drive shaft (17) which result from the mass moment of inertia of the conveying element (13) are counteracted.

## Revendications

1. Dispositif de transport de produits de l'industrie du tabac, en particulier de cigarettes (12) ou de groupes de cigarettes (11), comprenant un arbre d'entraînement (17), à l'aide duquel un organe de transport (13) pourvu d'une pluralité de logements (16) pour les produits à transporter (11, 12) peut être entraîné par intermittence par le biais d'un premier mécanisme pas-à-pas (24), **caractérisé par** les caractéristiques suivantes :
(a) une masse d'équilibrage rotative (38) peut être entraînée à l'aide de l'arbre d'entraînement (17) par le biais d'un deuxième mécanisme pas-à-pas (37),
(b) le deuxième mécanisme pas-à-pas (37) et la masse d'équilibrage (38) sont réalisés de telle sorte que des fluctuations de couple de l'arbre d'entraînement (17) résultant de l'inertie de masse de l'organe de transport (13) soient contrecarrées,
(c) les deux mécanismes pas-à-pas (24, 37) sont réalisés à chaque fois sous forme d'au moins une paire de mécanismes à cames (24, 37) comprenant des disques à came (30, 41),
(d) chaque mécanisme à cames (24, 37) coopère, pour transmettre des mouvements de rotation, à chaque fois avec une étoile à galets (34, 42) reposant sur un arbre de sortie (25, 44) du mécanisme à cames (24, 37) respectif,
(e) les deux paires de disques à came (30, 41) sont disposées sur un arbre intermédiaire (31) commun accouplé à l'arbre d'entraînement (17),
(f) la paire de disques à came (30) du premier mécanisme à cames (24) coopère, pour transmettre des mouvements de rotation, avec l'étoile à galets de l'arbre de sortie (25) du premier mécanisme à cames (24), cet arbre de sortie (25) étant accouplé à l'organe de transport (13) pour transmettre les mouvements de rotation à l'organe de transport (13),
(g) la paire de disques à came (30, 41) du deuxième mécanisme à cames (37) coopère, pour transmettre des mouvements de rotation, avec l'étoile à galets (41) de l'arbre de sortie (44) du deuxième mécanisme à cames (37), cet arbre de sortie (44) étant accouplé à la masse d'équilibrage (38) pour transmettre les mouvements de rotation à la masse d'équilibrage (38).

2. Dispositif selon la revendication 1, **caractérisé en ce que** le deuxième mécanisme pas-à-pas (37) et la masse d'équilibrage (38) sont réalisés de telle sorte que, lors du fonctionnement du dispositif (10), la masse d'équilibrage (38) applique, par le biais du deuxième mécanisme pas-à-pas (37), des couples à l'arbre d'entraînement (17) ou à un arbre supplémentaire (31) accouplé à celui-ci, lesquels couples compensent partiellement ou entièrement des couples que l'organe de transport (13) applique à l'arbre d'entraînement (17) ou à l'arbre supplémentaire (31) par le biais du premier mécanisme pas-à-pas (24).

3. Dispositif selon la revendication 2, **caractérisé en ce que** le deuxième mécanisme pas-à-pas (37) et la masse d'équilibrage (38) sont réalisés de telle sorte que, lors du fonctionnement du dispositif (10), à chaque instant, la valeur absolue du couple appliqué par la masse d'équilibrage (38) à l'arbre d'entraînement (17) ou à l'arbre supplémentaire (31) et s'opposant au couple appliqué par l'organe de transport (13) correspond à la valeur absolue du couple appliqué par l'organe de transport (13) à l'arbre.

4. Dispositif selon l'une quelconque ou plusieurs des revendications précédentes, **caractérisé en ce qu'**une roue dentée (23) repose sur l'arbre de sortie (25) du premier mécanisme pas-à-pas (24), laquelle roue dentée transmet éventuellement, par le biais d'une ou de plusieurs roues dentées intermédiaires supplémentaires, les mouvements de rotation de l'arbre de sortie (25) à un arbre (26) relié de manière solidaire en rotation à l'organe de transport (13).

5. Dispositif selon l'une quelconque ou plusieurs des revendications précédentes, **caractérisé en ce que** l'organe de transport (13) est un transporteur sans fin pour des cigarettes, en particulier une chaîne à poches ou une tourelle pourvue de poches pour la réception de cigarettes.

6. Dispositif selon l'une quelconque ou plusieurs des revendications précédentes, **caractérisé en ce que** le deuxième mécanisme pas-à-pas (37) et la masse d'équilibrage (38) sont réalisés de telle sorte que les couples de l'arbre d'entraînement (17) résultant de l'inertie de masse de l'organe de transport (13) soient contrecarrés.
